# EUROPEAN PATENT APPLICATION

(11) **EP 4 772 726 A2**
(43) Date of publication of application: **08.07.2026**
(21) Application number: 25222589.1
(22) Date of filing: 11.12.2025
(51) Int. Cl.: F01D 25/00

(54) **TOOL AND METHOD FOR CLEANING A PORTION OF A TURBINE ENGINE**

(30) Priority: 13.12.2024 US 202463733691 P
(71) Applicant: General Electric Company, Cincinnati, Ohio 45215 (US)
(72) Inventor: PETKAR, Kirti Arvind, 560066 Bengaluru (IN); G, Rajanikanth, 560066 Bengaluru (IN); SHUNMUGAM BALASUBRAMANIAM, Mahalakshmi, 560066 Bengaluru (IN); GUNDRUM, Michael Joseph, Springdale, 45246 (US); SORELL, Rachel Marie, Niskayuna, 12309 (US); LAURIA, Keith Anthony, Niskayuna, 12309 (US); KULKARNI, Ambarish Jayant, Niskayuna, 12309 (US); GRAHAM, Andrew Crispin, Altrincham, WA14 2DT (GB); YAMARTHI, David Raju, 560066 Bengaluru (IN); GANIGER, Ravindra Shankar, 560066 Bengaluru (IN); MATHEW, Paul, 560066 Bengaluru (IN); JHA, Sanjeev Humar, 560066 Bengaluru (IN); NAGESH, Mamatha, 560066 Bengaluru (IN); BIDKAR, Rahul, Niskayuna, 12309 (US)
(74) Representative: Openshaw & Co.

(57) **Abstract**

A tool (100) for cleaning a portion of a turbine engine (10) is provided, the tool comprising a rigidizable guide tube (106) including a proximal end (120) and a distal end (122) and configured to be inserted into a portion of the turbine engine (10), a flexible inner tube (104) disposed within a portion of the rigidizable guide tube (106), the flexible inner tube (104) including a proximal end (130) and a distal end (132),
a fluid delivery supply (310) coupled to the flexible inner tube (104) for delivering fluid to spray on a surface of an airfoil, and filaments (108) coupled to the distal end (132) (122) of at least one of the flexible inner tube (104) or the rigidizable guide tube (106), wherein when fluid is injected into the flexible inner tube (104), the filaments (108) are configured to agitate the surface of the airfoil.

## Description

### CROSS-REFERENCE TO RELATED APPLICATIONS

This application claims the benefit of priority of U.S. Provisional Application No. 63/733,691, filed Dec. 13, 2024, the content of which is hereby incorporated by reference in its entirety.

### FIELD OF THE DISCLOSURE

The present subject matter relates generally to tools for cleaning and/or maintenance operations on a component within a turbine engine, and methods for cleaning thereof.

### BACKGROUND

Cleaning and maintaining the various blades of a turbine engine, specifically the leading edge of an airfoil, reduces aerodynamic losses in the overall performance of the turbine engine. Maintaining the airfoils of the turbine engine, by removing debris, increases efficiency of the various stages of the turbine engine and aids in inspection of the surface of the airfoils. Cleaning and maintaining the airfoils typically comprises a wash to clear debris from the airfoils.

### BRIEF DESCRIPTION OF THE DRAWINGS

Various needs are at least partially met through provision of the tool for cleaning a surface of a component described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a schematic view of a gas turbine engine in accordance with various embodiments of these teachings;
FIG. 2 comprises a perspective view of a portion of a turbine servicing tool in an undeployed configuration according to some embodiments;
FIG. 3 comprises a perspective view of a portion of a turbine servicing tool in a deployed configuration according to some embodiments;
FIG. 4 comprises a perspective view of a portion of a turbine servicing tool in a deployed configuration according to some embodiments;
FIG. 5A comprises a perspective view of a filament of the turbine servicing tool of FIGS. 3 and 4 according to some embodiments;
FIG. 5B comprises a perspective view of a filament of the turbine servicing tool of FIGS. 3 and 4 according to some embodiments;
FIG. 5C comprises a perspective view of a filament of the turbine servicing tool of FIGS. 3 and 4 according to some embodiments;
FIG. 5D comprises a perspective view of a filament of the turbine servicing tool of FIGS. 3 and 4 according to some embodiments;
FIG. 5E comprises a perspective view of a filament of the turbine servicing tool of FIGS. 3 and 4 according to some embodiments;
FIG. 6 comprises a perspective view of a portion of a turbine servicing tool in an undeployed configuration according to some embodiments;
FIG. 7 comprises a perspective view of a portion of the turbine servicing tool of FIG. 6 according to some embodiments;
FIG. 8 comprises a cross-sectional view of a portion of the turbine servicing tool of FIG. 6 according to some embodiments;
FIG. 9 comprises a system diagram of a wash cart according to some embodiments; and
FIG. 10 illustrates a flow diagram of a method for cleaning a component of a turbine engine according to some embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Reference now will be made in detail to embodiments of the present disclosure, one or more examples of which are illustrated in the drawings. Each example is provided by way of explanation of the present disclosure, not limitation of the disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise. As used herein, the terms "first," "second," and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

In general, the present subject matter relates to a cleaning tool and a method for using thereof. The tool may be used for removing material from an airfoil, such as a blade in a turbine engine. The material may include material deposited on the surface of the airfoil, such as dust, sand, and debris. In some embodiments, a portion of the tool is insertable into a portion of the turbine engine, for example, a borescope port. In some embodiments, the tool includes a rigidizable guide tube for deployment within the turbine engine. In some embodiments, the tool includes a tool body insertable into a borescope port of the turbine engine. The tool may include an element configured to contact the surface of an airfoil. In some embodiments, the tool may include a plurality of filaments configured to contact the surface of an airfoil. The plurality of filaments may be retractable into and out of a portion of the tool. Further, in some embodiments, the plurality of filaments are flexible or substantially flexible such that the filaments bend upon contact with the airfoil for removing material from the airfoil. In some embodiments, the tool includes a patterned wand configured to spray a fluid onto the surface of an airfoil or the turbine engine. In some embodiments, the patterned wand includes a plurality of orifices including an associated spray pattern for contacting a portion of the airfoil.

In some embodiments, the tools and methods described herein provide for increased efficiency of the airfoils, and in turn, the associated stages of the turbine engine, by removing dust and debris from the surface of the airfoils. This tool may remove material, such as dust and debris, from the surface of the airfoil through contact between a portion of the tool and/or a fluid delivered by the tool with airfoil. This may be achieved through relative motion between the tool and the airfoil. This may additionally or alternatively be achieved through relative motion between a portion of the tool and/or a fluid delivered by the tool with the airfoil. Removing dust and debris from the surface increase efficiency and performance of the associated stage of the turbine engine.

In some embodiments, the tools and methods described herein provide for more efficient and effective cleaning when used in conjunction with rotation of the airfoils while using the tool. This is achieved by using the tool while the blades rotate relative to the tool. Some cleaning treatments typically require a time span between when the treatment is used to allow for a chemical reaction of the treatment to remove material. Once the time span has completed, an engine run is typically required to remove the debris loosened during the chemical reaction. Utilizing the tool in conjunction with these treatments while the airfoils are rotating allows for the removal of material and may not require the full engine run to remove the material from the airfoils. Similar to above, the physical contact used with the cleaning treatment may provide more effective removal of material.

In some embodiments, the tools and methods described herein provide for decreased cleaning time by removing material, such as dust and debris, from the airfoils of a turbine engine. This may be achieved by performing the material removal while the airfoils are in an at least substantially assembled state within the engine. This allows for cleaning at the assembled level and does not require partial or whole disassembly to clean the airfoils. This may also allow for cleaning on a full stage of airfoils using relative motion between the tool and airfoils.

In some embodiments, the tools and methods described herein provide for increased cleaning by removing surface dust and debris from the airfoils. This is achieved through the physical contact between the tool and the airfoil. This physical contact may allow for additional cleaning beyond the typical washes used.

In some embodiments, the tools and methods described herein provide for more efficient and effective cleaning when used in conjunction with a cleaning treatment. This is achieved by using a cleaning treatment, such as a foam wash, before or after the methods described herein. In some embodiments, the tool may be used during a foam wash. Utilizing the tool in conjunction with these treatments may provide more effective removal of material.

In some embodiments, the tools and methods described herein provide for increased inspection capability. This is achieved by the tool removing material from the surface of the airfoil. The removal of the material from the surface of the airfoil exposes the surface of the airfoil such that the tool or a second tool or device may be utilized to inspect the surface of the airfoil.

In some embodiments, the tools and methods described herein provide for localized cleaning utilizing fluid in conjunction with the physical contact between the tool and the airfoils. This is achieved using flowpaths within the tool to provide fluid at or near the point of contact between the tool and the airfoil. This allows for the application of fluid and other washing substances to be delivered locally to the airfoils of the turbine engine.

The foregoing and other benefits may become clearer upon making a thorough review and study of the following detailed description.

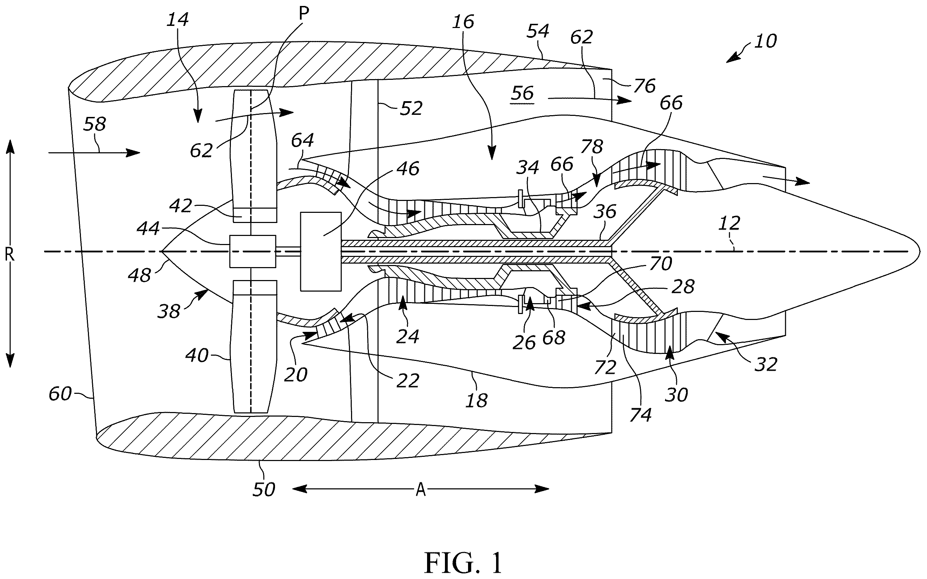

Referring now to the drawings, wherein identical numerals indicate the same elements throughout the figures, FIG. 1 illustrates a schematic view of an exemplary gas turbine engine 10 that may be inspected and/or serviced utilizing the tools described herein. The gas turbine engine is a high-bypass turbofan jet engine, referred to herein as "turbine engine 10." The turbine engine 10 defines an axial direction A (extending parallel to a longitudinal centerline 12 of the turbine engine 10 provided for reference) and a radial direction R. In general, the turbine engine 10 includes a fan section 14 and a core turbine engine 16 disposed downstream from the fan section 14.

The exemplary core turbine engine 16 depicted generally includes a substantially tubular outer casing 18 that defines an annular inlet 20. The tubular outer casing 18 encases, in serial flow relationship, a compressor section including a low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) spool 36 drivingly connects the LP turbine 30 to the LP compressor 22.

As depicted in FIG. 1, the fan section 14 includes a fan 38 (e.g., a variable pitch fan) having a plurality of fan blades 40 coupled to a disk 42 in a spaced apart manner. As depicted in FIG. 1, the fan blades 40 extend outwardly from the disk 42 generally along the radial direction R. Each fan blade 40 is rotatable relative to the disk 42 about a pitch axis P by virtue of the fan blades 40 being operatively coupled to an actuation member 44 configured to collectively vary the pitch of the fan blades 40 in unison. The fan blades 40, the disk 42, and the actuation member 44 are together rotatable about the longitudinal centerline axis 12 via a fan shaft that is powered by the low-pressure (LP) shaft 36 across a power gearbox, also referred to as a gearbox assembly 46. The gearbox assembly 46 is shown schematically in FIG. 1. The gearbox assembly 46 includes a plurality of gears for adjusting the rotational speed of the fan shaft and, thus, the fan 38 relative to the LP shaft 36.

Referring still to the exemplary embodiment of FIG. 1, the disk 42 is covered by a rotatable fan hub 48 aerodynamically contoured to promote an airflow through the plurality of fan blades 40. In addition, the fan section 14 includes an annular fan casing or a nacelle 50 that circumferentially surrounds the fan 38 and/or at least a portion of the core turbine engine 16. The nacelle 50 is supported relative to the core turbine engine 16 by a plurality of outlet guide vanes 52 that is spaced circumferentially about the nacelle 50. Moreover, a downstream section 54 of the nacelle 50 extends over an outer portion of the core turbine engine 16 to define a bypass airflow passage 56 therebetween.

During operation of the turbine engine 10, flowing substantially along the axial direction, A, a volume of air 58 enters the turbine engine 10 through an inlet 60 of the nacelle 50 and/or the fan section 14. As the volume of air 58 passes across the fan blades 40, a first portion of air 62 is directed or routed into the bypass airflow passage 56, and a second portion of air flow 64 is directed or is routed into the upstream section of the core air flow path, or, more specifically, into the annular inlet 20 of the LP compressor 22. The ratio between the first portion of air 62 and the second portion of air flow 64 is commonly known as a bypass ratio. The pressure of the second portion of air flow 64 is then increased, forming compressed air, and the compressed air is routed through the high-pressure (HP) compressor 24 and into the combustion section 26, where the compressed air is mixed with fuel and burned to provide combustion gases 66.

The combustion gases 66 are routed into the HP turbine 28 and expanded through the HP turbine 28 where a portion of thermal energy and/or kinetic energy from the combustion gases 66 is extracted via sequential stages of HP turbine stator vanes 68 that are coupled to the outer casing 18 and HP turbine rotor blades 70 that are coupled to the HP shaft 34, thus, causing the HP shaft 34 to rotate, thereby supporting operation of the HP compressor 24. The combustion gases 66 are then routed into the LP turbine 30 and expanded through the LP turbine 30. Here, a second portion of thermal energy and/or the kinetic energy is extracted from the combustion gases 66 via sequential stages of LP turbine stator vanes 72 that are coupled to the outer casing 18 and LP turbine rotor blades 74 that are coupled to the LP shaft 36, thus, causing the LP shaft 36 to rotate, thereby supporting operation of the LP compressor 22 and rotation of the fan 38 via the gearbox assembly 46.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before being exhausted from a fan nozzle exhaust section 76 of the turbine engine 10, also providing propulsive thrust. The HP turbine 28, the LP turbine 30, and the jet exhaust nozzle section 32 at least partially define a hot gas path 78 for routing the combustion gases 66 through the core turbine engine 16.

It should be appreciated, however, that the exemplary turbine engine 10 depicted in FIG. 1 is provided by way of example only, and that in other exemplary embodiments, the turbine engine 10 may have any other suitable configuration. It should also be appreciated that in still other exemplary embodiments, aspects of the present disclosure may be incorporated into any other suitable gas turbine engine. For example, in other exemplary embodiments, aspects of the present disclosure may be incorporated into, e.g., a turboprop engine, a turboshaft engine, or a turbojet engine. Further, in still other embodiments, aspects of the present disclosure may be incorporated into any other suitable turbomachine, including, without limitation, a steam turbine, a centrifugal compressor, and/or a turbocharger.

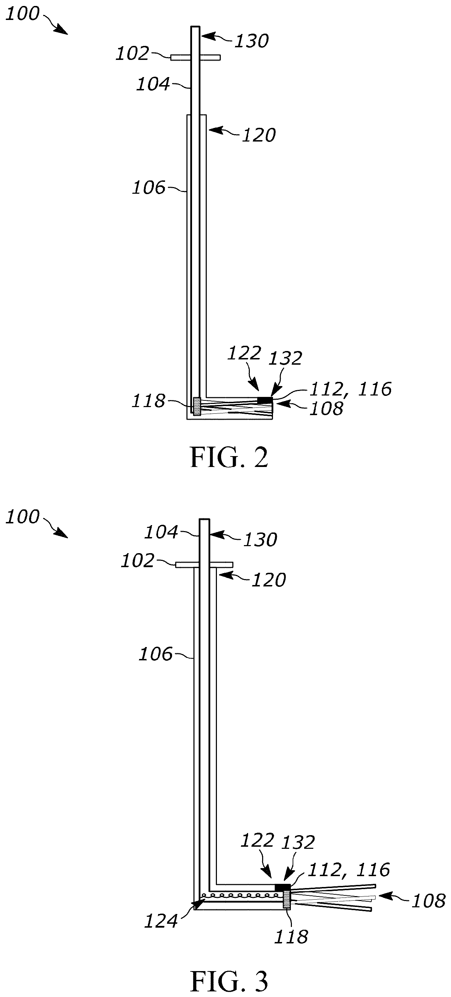

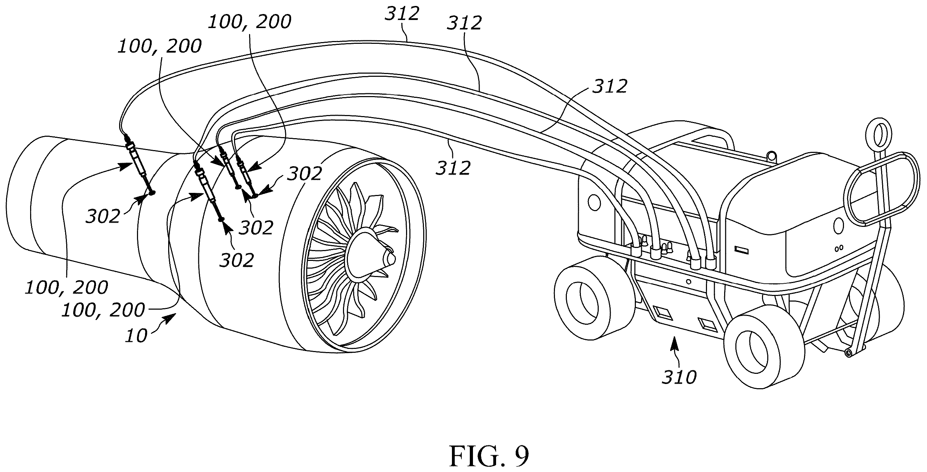

Referring to FIGS. 2 to 4, a tool 100 for cleaning a portion of the turbine engine 10 is shown. The tool 100 includes a rigidizable guide tube 106 including a proximal end 120 and a distal end 122. The tool 100 is configured to be inserted into a portion of the gas turbine engine 10. For example, the rigidizable guide tube 106 is configured to be inserted into an access opening (e.g., borescope port 302 (FIG. 9)) of the gas turbine engine 10. The tool 100 further includes a flexible inner tube 104 disposed within a portion of the rigidizable guide tube 106. The flexible inner tube 104 may be insertable and slidable though the rigidizable guide tube 106. The flexible inner tube 104 may be configured to be water-tight or fluid-tight in instances where the rigidizable guide tube is not. The flexible inner tube 104 includes a proximal end 130 and a distal end 132. The tool 100 further includes a fluid delivery supply 310, shown in FIG. 9, coupled to the rigidizable guide tube 106 for delivering fluid to the tool 100 for injecting into the turbine engine 10 and onto a surface of an airfoil.

The rigidizable guide tube 106 is configured as a guide tube. In such a manner, the rigidizable guide tube 106 includes a plurality of sequentially arranged links that together define a hollow tube extending therethrough and permit the insertion of the flexible inner tube 104 to pass therethrough. Further, the rigidizable guide tube 106 includes a plurality of sequentially arranged links configured to move between a slacked position and a tensioned position. The plurality of sequentially arranged links are spaced from one another when in the slacked position to allow the plurality of sequentially arranged links to pivotably move relative to one another. By contrast, the plurality of sequentially arranged links are pressed against one another when in the tensioned position to rigidly fix the plurality of sequentially arranged links to one another. One or more lines may be utilized to tension the plurality of sequentially arranged links. Accordingly, it will be appreciated that the lines are generally flexible (i.e., will not prevent the plurality of sequentially arranged links from pivotably moving relative to one another in the slacked position). Further, the tensioned position may include a nonlinear, two-dimensional or three-dimensional shape when the plurality of sequentially arranged links are in the tensioned position. Notably, the ability to additionally be moved to a slacked position may assist with moving the plurality of links through the turbine engine 10 and through the borescope port.

The tool 100 also includes filaments 108 disposed within the distal end 122 and 132 of both the flexible inner tube 104 and the rigidizable guide tube 106. In some embodiments, when fluid is injected into the flexible inner tube 104, the filaments 108 are configured to deploy at least partially out of the distal end 122 and 132 of both the flexible inner tube 104 and the rigidizable guide tube 106 towards the surface of the airfoil. In one embodiment, the filaments 108 may be deployed out of the flexible inner tube 104 due to the force of the fluid passing out of the distal ends 122 and 132. The filaments 108 are coupled to a collar 118. The collar 118 is slidable within the flexible inner tube 104 and sized such that the diameter of the collar 118 is larger than the diameter at the distal end 122 of the flexible inner tube 104. The collar 118 allows the filaments 108 to be deployed outward from the distal ends 122 and 132 while still being constrained within the flexible inner tube 104. In some embodiments, the collar 118 is disposed at the distal ends 122 and 132 such that the filaments 108 are deployed through the collar 118, and the collar 118 constrains ends of the filaments 108 such that the filaments 108 are maintained within the flexible inner tube 104 in use. By including filaments 108 deployable outward from the distal ends 122 and 132, the filaments 108 may be protected from unintended contact with various portions of the turbine engine 10 as the tool 100 is being inserted into the borescope port. In one configuration, the filaments 108 are fixed to the distal end 122 of the flexible inner tube 104 such that they are deployed once the flexible inner tube 104 is inserted into the tool 100, and the toll 100 is in position. In another configuration the filaments 108 are fixed to the distal end 122 and 132 such that they are deployed once the tool 100 is in position, including the flexible inner tube 104 fixed within the rigidizable guide tube 106.

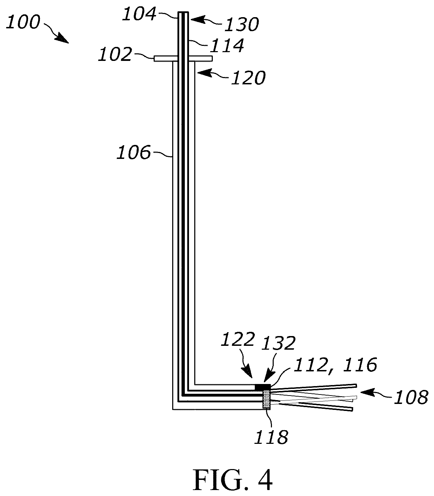

The flexible inner tube 104 may include a stop 102 configured to contact the proximal end 120 of the rigidizable guide tube 106. In some embodiments, the stop 102 contacts the proximal end 120 of the rigidizable guide tube 106 when the flexible inner tube 104 is fully inserted into the rigidizable guide tube 106 to prevent the over-insertion of the flexible inner tube 104 into the rigidizable guide tube 106. In some embodiments, the stop 102 contacts the proximal end 120 of the rigidizable guide tube 106 when the filaments 108 are deployed, as shown in FIGS. 3 and 4. In some embodiments, the collar 118 is attached to an end of the filaments 108 and is configured to contact at least one of the distal ends 122 and 132 to prevent the over-deployment of the filaments 108 out of the distal ends 122 and 132. In further configurations, the filaments 108 are fixed at the distal ends 122 and 132, via the collar 118 being coupled to the distal ends 122 and 132. In this configuration, the filaments 108 extend from the distal end 122 and 132 of both the flexible inner tube 104 and the rigidizable guide tube 106. In some embodiments, the filaments 108 are at least partially flexible in order to be inserted into the borescope port.

In some embodiments, the fluid delivery supply 310, as shown in FIG. 9, is configured to deliver compressed air, liquid, and/or steam to the rigidizable guide tube 106 and through the flexible inner tube 104. Additionally, in some embodiments, the fluid delivery supply 310 is configured to inject the fluid at approximately 70 - 300 psi. In further configurations, the fluid delivery supply 310 is configured to inject the fluid at approximately 1,000 - 5,000 psi. In some embodiments, the fluid may be injected at certain psi ranges in order to create a turbulent flow. In creating a turbulent flow, the filaments agitate the surface of the airfoil with increased energy and variance resulting in a more efficient and effective cleaning of the surface. These ranges, utilizing corresponding Reynolds numbers, may be based, at least in part on, the length, size, texture, or rigidness of the filaments 108, as well as the diameter and length of the flexible inner tube 104, and further, the density and/or viscosity of the fluid. For example, utilizing more rigid or stiff filaments results in a higher frequency of movement of the filaments and, in turn, results in a higher cleaning efficiency.

Further, in some embodiments, the fluid is mixed with additional media to form a slurry. The media may include, abrasive organic material, such as hard nut shells, corn cobs, and fruit pits, for example crushed walnut shells and apricot pits. Additionally, the media may include pH neutral water-soluble dry blasting media. Further, the steam may include a dry steam.

As shown in FIG. 3, the filaments 108 are deployed from the distal ends 122 and 132 of the rigidizable guide tube 106 and flexible inner tube 104. When deployed, either retractable or fixed, the filaments 108 include a length deployed from the distal ends 122 and 132. In some embodiments, the length of the filaments 108 extending out from the distal end 122 and 132 ranges from approximately 1 inch to 1.5 inches. In further embodiments, the length of the filaments 108 may be determined by the amount of space between the airfoils or blades of the different stages of the turbine engine 10. Further, in some embodiments, the length of the filaments 108 may vary such that there is a non-uniform length of each individual filament. As noted above, the length of the filaments 108 may be adjusted to achieve a desired flow and contact between the filaments 108, the fluid, and the surface of the airfoil. Once the fluid stops flowing from the flexible inner tube 104, in embodiments utilizing retractable filaments, the filaments may be retracted back into the distal ends 122 and 132 of the rigidizable guide tube 106 and flexible inner tube 104. This may utilize a spring-loaded mechanism 124 in which the biasing force biasing the filaments into the distal ends 122 and 132 is less than the force produced by the fluid as it exits the distal ends 122 and 132.

Referring to FIG. 4, in some embodiments, the tool 100 includes a second flexible inner tube 114 disposed within the rigidizable guide tube 106. The second flexible inner tube 114 is disposed substantially adjacent to the flexible inner tube 104. In some embodiments, the flexible inner tube 104 is configured to be connected to the fluid delivery supply 310 and the second flexible inner tube 114 is configured to be a vacuum. In this configuration, a fluid can be injected through the 104, deploying the filaments 108. The retractable filaments 108 may physically contact a component of the turbine engine 10 and remove debris from a surface thereof. The removed/fallen debris can then be vacuumed out substantially as the debris is removed through the second flexible inner tube 114. In some embodiments, a second fluid is passed through the second flexible inner tube 114 as a first fluid is passed through the flexible inner tube 104. The first fluid and the second fluid may be substantially the same or different fluid and may be at the same or different temperatures. Further, the psi at which the first fluid and second fluid are ejected from the distal end 122 may vary. Additionally, the first fluid and the second fluid may be pulsed at different frequencies and amplitudes (psi) to increase the agitation between the filaments 108 and the surface of the airfoil.

In some embodiments, the tool 100 may include a light 112 (e.g., an LED) disposed at the distal end distal end 122 of the rigidizable guide tube 106. Further, in some embodiments, the tool 100 may include a camera 116 disposed at the distal end distal end 122 of the rigidizable guide tube 106. In some configurations utilizing both the light 112 and the camera 116, the camera 116 may be used to confirm proper cleaning of the component and/or determine if more cleaning is required. In this way, the light 112 may be used to provide light for the camera 116.

In some embodiments, a post-clean assessment may be done with the camera 116 to determine the quality of the cleaning to the airfoils. This may include computer vision and other techniques to project a future maintenance action, such as a future cleaning. Further, this may be used to determine sufficient cleaning to the airfoils and include the potential for additional cleaning of the airfoils while the tool 100 remains deployed within the turbine engine 10.

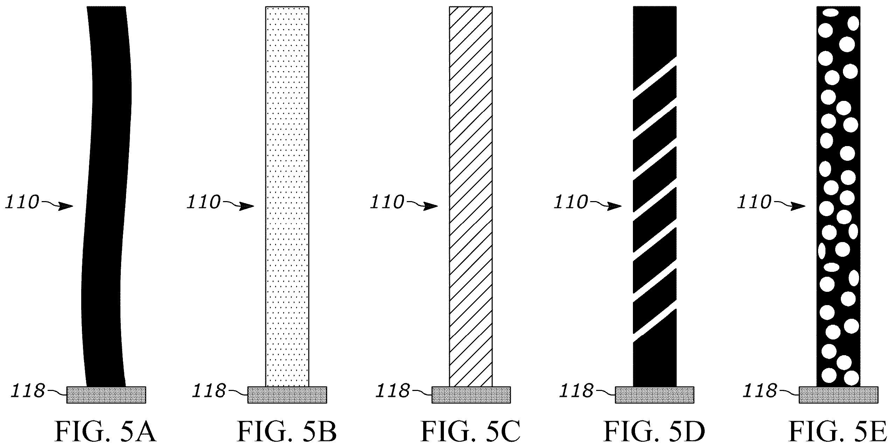

Referring to FIGS. 5A to 5E, an exemplary filament 110 is shown coupled to a portion of a collar 118. The filament 110 may be made of plastic, such as polyethylene, or another suitable material that is capable of removing debris from the surface of the component without removing the material of the component itself. As shown in FIG. 5A, the exemplary filament 110 may be non-linear such that there is a curve or a wave along the exemplary filament 110. As shown in FIG. 5B, the exemplary filament 110 may include a textured surface. The textured surface may include, for example, a high grit sandpaper. As shown in FIG. 5C, the exemplary filament 110 includes a ribbed surface to increase the surface area contacted between the retractable filaments 108 and the component. Referring to FIG. 5D, the exemplary filament 110 may have a corrugated or grooved surface, similar to the ribbed surface, to increase the surface area contacted between the retractable filaments 108 and the component. Yet further, referring to FIG. 5E, the exemplary filament 110 may have a dimpled surface to increase the surface area and create non-uniform and/or varying contact between the retractable filaments 108 and the component. Some additional non-limiting examples of the exemplary filament 110 may include disposable/abradable filaments fed by a continuous spool coupled to the tool 100, removably couplable filaments that can be quickly interchanged via a collar for varying cleaning characteristics, and an array of varying filament types and textures may be used to increase the agitation between the filaments and surface of the airfoil at different psi.

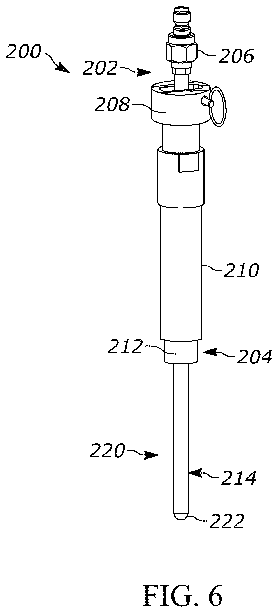

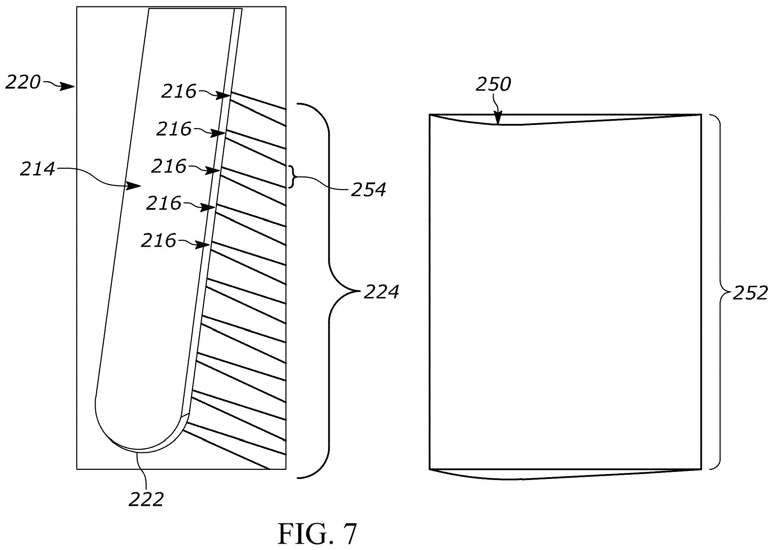

Referring to FIGS. 6 to 8, a tool 200 for cleaning a portion of a turbine engine 10 is shown. The tool 200 includes a tool body 210 including a proximal end 202 and a distal end 204 and configured to be inserted into a portion of the gas turbine engine 10. The tool 200 also includes a wand 220 coupled to the distal end 204 of the tool body 210. The wand 220 includes a plurality of orifices 214 disposed along a length 244 of the wand 220 and a rounded tip 222. A fluid delivery supply 310, shown in FIG. 9, can be coupled to the proximal end 202 of the tool body 210 for delivering fluid to spray a surface of an airfoil 250. When the fluid is injected into the tool body 210, the fluid is configured to spray onto the surface of the airfoil 250 in a pre-defined spray pattern 224. In some embodiments, the plurality of orifices include a hole array 226 configured to create the spray pattern 224 and cover at least 50% of a span 252 of the airfoil 250. In some embodiments, the plurality of orifices include a hole array 226 configured to create the spray pattern 224 and cover at least 90%, and in some configurations all, of a span of the airfoil.

The tool 200 may include a connector 206 configured to couple the tool 200 to the fluid delivery supply 310 for injection of the fluid into the tool 200 and out of the wand 220. Additionally, the tool 200 may include one or more connectors 208 and 212 to connect the tool 200 to an opening in the turbine engine 10, such as a borescope port. The connectors 208 and 212 provide set pre-defined depths the tool 200 can be inserted into the turbine engine 10 since the connectors 208 and 212 are spaced from one another along the tool body 210. The connectors 208 and 212 may be connected to the borescope opening via a push-fit or threaded connection. The fluid delivery supply 310 is configured to deliver compressed air, liquid, and/or steam. In some embodiments, the fluid is injected at approximately 1,000 - 5,000 psi. Further, in some embodiments, the fluid is mixed with additional media to form a slurry.

In some embodiments, the spray pattern 224 includes a spacing 254 of approximately 0.04 inches when the fluid contacts the airfoil. This may result in each orifice 216 having a spacing 238 approximately 0.02 to 0.1 inches between each adjacent orifice 216 in the hole array 226. In some embodiments, the spray pattern 224 includes a spray expansion of between 4 to 20 degrees when the fluid is contacting the surface of airfoil.

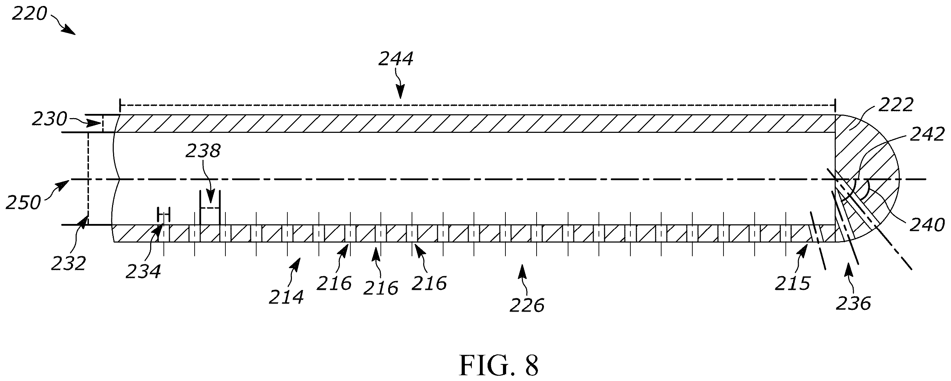

In some embodiments, referring to FIG. 8 in particular, the walls of the wand 220 include a thickness 230 that is approximately 1.5 times a diameter 234 of each orifice 216 of the plurality of orifices 214. In some embodiments, the plurality of orifices 214 include a diameter 234 of approximately 0.015 and 0.035 inches. Further, the hole array 226 includes a total orifice area. The total orifice area determined by the diameter 234 and the number of orifices 216 in the plurality of orifices 214. The tool 200, and in turn the wand 220, includes an opening that runs from the connector 206 to the rounded tip 222. The wand 220 includes an opening diameter 232 that ranges from 100% to 150% of the total orifice area.

The plurality of orifices 214 may include a generally uniform shape for each orifice 216 comprising the plurality of orifices 214. The shape of the plurality of orifices 214 may include, for example, a circular or an ovular shape. In some embodiments, the shape of some of the orifice 216 in the plurality of orifices 214 differs, resulting in a non-uniform shape of the plurality of orifices 214.

In some embodiments, a majority of the plurality of orifices 214 are disposed along the length 244 of the wand 220. The plurality of orifices 214 disposed along the length 244 are generally perpendicular to a longitudinal centerline 250 of the wand 220. In some embodiments, one or more orifices 215 of the plurality of orifices 214 disposed along the length 244 of the wand 220 are angled (i.e., non-perpendicular) relative to the longitudinal centerline 250. In some embodiments, at least some of the plurality of orifices 214 are disposed on the rounded tip 222 of the wand 220. The orifices 236 disposed on the rounded tip 222 may be disposed substantially in line with the plurality of orifices 214 disposed along the length of the wand 220 and at an angle different than the majority of the plurality of orifices 214, relative to the longitudinal centerline 250. For example, the orifices 236 disposed on the rounded tip 222 may disposed at one or more second angles 240 and 242 relative to the longitudinal centerline 250. The angles 240 and 242 may range from 105° to 135° relative to the longitudinal centerline 250 when looking at the cross-section of the wand 220.

Referring to FIG. 9, the turbine engine 10 and the fluid delivery supply 310 are shown adjacent to one another. The fluid delivery supply 310 includes one or more delivery lines 312 configured to be coupled to one or more access openings, such as borescope ports 302 of the turbine engine 10 via the tool 100 and the tool 200. As noted above, the fluid delivery supply 310 may be fluidly coupled to the tool 100 and the tool 200 to locally provide the fluid to the turbine engine 10. The fluid delivery supply 310 is configured to provide compressed air, water, and/or steam. Additionally, the fluid delivery supply 310 may be configured to include additional media with the fluid to form a slurry.

The fluid delivery supply 310 may be used to inject fluid, such as steam, through the annular inlet 20 (FIG. 1) and/or the one or more borescope ports 302. Additionally, the fluid delivery supply 310 may deliver the fluid to the tool 100 and 200 before a conventional cleaning process, such as a foam wash, concurrently with the convention cleaning process, and/or subsequently after the convention cleaning process. Each use of the tool 100 or 200 in conjunction with the foam wash provides additional cleaning benefits. For example, utilization of the tool 100 or 200 before the foam wash cleaning allows for a pre-clean and the ability to remove excess debris deposited on the airfoil, increasing the effectiveness of the foam wash. For utilizing of the tool 100 or 200 during the foam wash cleaning allows for additional cleaning along with the foam wash to help the foam wash penetrate further into any excess debris deposited on the airfoil, thus increasing the effectiveness of the foam wash. Finally, utilizing the tool 100 or 200 after the foam wash cleaning allows for a final scrubbing of the airfoils of any remaining debris on the airfoils that was not removed by the foam wash and/or prior use of the tool 100 or 200.

The fluid delivery supply 310 includes a portable wash cart. The wash cart for providing the fluid for the one or more delivery lines 312 and may be moved around, within, and through an environment including the turbine engine 10. The portability of the fluid delivery supply 310 allows for the cleaning of the airfoils while the turbine engine 10 is on-wing, i.e., in a substantially assembled state. This allows for more efficient cleaning by reducing disassembly time and/or by reducing time spent maneuvering the turbine engine 10 to the fluid delivery supply 310.

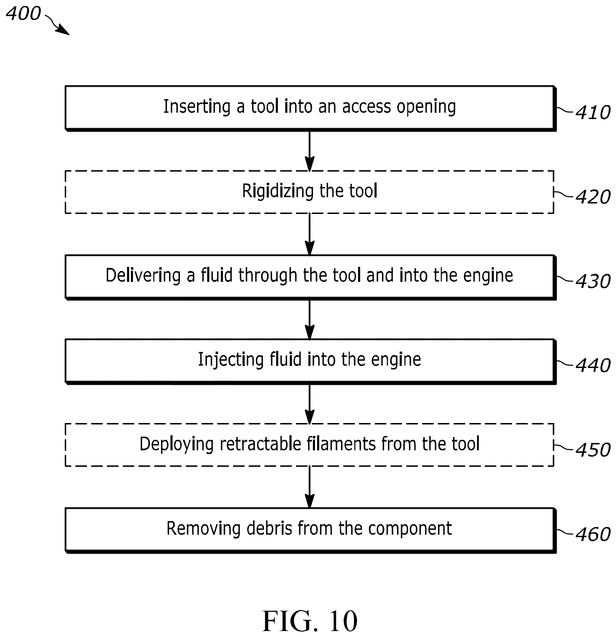

Referring to FIG. 10, a method 400 for cleaning a component of the turbine engine 10 is shown. The method 400 includes a step 410 of inserting the tool 100 or the tool 200 into an access opening, such as a borescope port 302 of the turbine engine 10. This may include, for example, a portion of the tool 100 and 200 such as the rigidizable guide tube 106 and/or the tool body 210 and patterned wand 220. The method 400 further includes an optional step 420 of rigidizing the tool 100, and the plurality of sequentially arranged links, from the slacked position to the tensioned position, when a rigidizable guide tube 106 is used. The method includes a step 430 of delivering a fluid to the tool 100 and 200. The fluid may be delivered to the tool 100 and 200 via the fluid delivery supply 310. The fluid delivery supply 310 may be fluidly coupled to the tool 100 and 200.

The method 400 further includes a step 440 of injecting the fluid into the turbine engine 10. The fluid may be injected through the flexible inner tube 104 and/or the patterned wand 220 and delivered locally to a surface of a component of the turbine engine 10. As noted above, the fluid may be compressed air, water, and/or steam.

The method 400 further includes an optional step 450 of deploying the filaments 108 from the distal end 122 and 132 of the rigidizable guide tube 106 and flexible inner tube 104. Deploying the filaments 108 may include, as described above, using the force of the fluid to push the filaments 108 outward from the distal ends 122 and 132. Deploying the filaments 108 may alternatively include having fixed filaments 108 to the distal ends 122 and 132 and positioning the filaments 108 in front of the surface of the airfoil. The method includes a step 460 of removing debris from the component. The removal may occur by the physical contact of the retractable filaments 108 and/or the fluid contacting the component.

In use, the fluid is injected into the turbine engine 10 at an associated psi. In some embodiments, the fluid contacting the airfoils may be used to rotate the airfoils of the associated stage or element. Utilizing the fluid to rotate the airfoils allows for the cleaning of each of the airfoils in the associated stage or element without the need of rotating the airfoils through the use of the starter of the turbine engine 10. This increases the efficiency of the cleaning process.

In further configurations, the turbine engine 10 may be rotated via a turning tool coupled to a portion of the turbine engine 10 while the tool 100 or 200 is inserted into the borescope port. Doing so allows the tool 100 or 200 to clean each airfoil in a particular stage of the turbine engine 10. Additionally or alternatively, the tool 100 or 200 may be moved along the span of the airfoil to clean substantially the entire span of the airfoil. This may enhance the efficiency of the cleaning and further enhance the effectiveness of the cleaning.

In further configurations, an actuator may be used with the tool 100 or 200 to agitate the surface of the airfoil and progress the tool 100 or 200 along the span of the airfoil. This may result in moving the tool 100 or 200 into and out of the borescope opening while the span of the airfoil is being cleaned.

Further aspects of the disclosure are provided by the subject matter of the following clauses:

A tool for cleaning a portion of a turbine engine including a rigidizable guide tube including a proximal end and a distal end and configured to be inserted into a portion of the turbine engine; a flexible inner tube disposed within a portion of the rigidizable guide tube, the flexible inner tube including a proximal end and a distal end; a fluid delivery supply coupled to the flexible inner tube for delivering fluid to spray on a surface of an airfoil; and filaments coupled to the distal end of at least one of the flexible inner tube or the rigidizable guide tube, wherein when fluid is injected into the flexible inner tube, the filaments are configured to agitate the surface of the airfoil.

The tool of the preceding clause, wherein the filaments are retractable and are configured to be deployed at least partially out of the distal end of both the flexible inner tube and the rigidizable guide tube.

The tool of any preceding clause, wherein the fluid delivery supply is configured to deliver compressed air, liquid, and/or steam.

The tool of any preceding clause, wherein the filaments are coupled to a collar coupled to or disposed at least partially within the flexible inner tube.

The tool of any preceding clause, wherein the rigidizable guide tube is configured to be inserted into a borescope opening of the turbine engine.

The tool of any preceding clause, further including a second flexible inner tube disposed within the rigidizable guide tube and substantially adjacent to the flexible inner tube.

The tool of any preceding clause, wherein the second flexible inner tube is configured to be connected to a vacuum to remove fallen debris from the airfoil.

The tool of any preceding clause, wherein a second fluid is passed through the second flexible inner tube.

The tool of any preceding clause, further including a camera disposed on the distal end of the rigidizable guide tube.

The tool of any preceding clause, further including a light disposed on the distal end of the rigidizable guide tube.

The tool of any preceding clause, wherein the filaments include a length of approximately 1 to 1.5 inches.

The tool of any preceding clause, wherein the fluid delivery supply is configured to inject the fluid at approximately 70 - 300 psi.

The tool of any preceding clause, wherein the fluid delivery supply supplies the fluid mixed with abrasive organic media forming a slurry.

The tool of any preceding clause, wherein the fluid delivery supply supplies the fluid mixed with pH neutral water-soluble dry blasting media forming a slurry.

The tool of any preceding clause, wherein the filaments are corrugated.

The tool of any preceding clause, wherein the filaments include a textured surface.

The tool of any preceding clause tool, wherein the filaments include a dimpled surface.

The tool of any preceding clause, wherein the filaments include varying materials.

The tool of any preceding clause, wherein the filaments include a spool of abradable material coupled to the tool and are continuously fed within the flexible inner tube to the distal end of both the flexible inner tube and the rigidizable guide tube.

A method for cleaning a portion of a turbine engine including inserting a rigidizable guide tube into a borescope port of the turbine engine, wherein the rigidizable guide tube includes a proximal end and a distal end; rigidizing the rigidizable guide tube; injecting steam into the rigidizable guide tube and into a portion of the turbine engine; delivering a fluid through a flexible inner tube disposed within a portion of the rigidizable guide tube to spray a surface of an airfoil, the flexible inner tube including a proximal end and a distal end; and deploying filaments disposed within the distal end of at least one of the flexible inner tube or the rigidizable guide tube, wherein the filaments are configured to be deployed at least partially out of the distal end of both the flexible inner tube and the rigidizable guide tube towards the surface of the airfoil.

The method of any preceding clause, further including performing a foam wash before inserting the rigidizable guide tube into the borescope port.

The method of any preceding clause, further including removing the rigidizable guide tube from the one or more borescope ports after the airfoil is at least partially cleaned.

The method of any preceding clause, further including performing a foam wash subsequent to removing the rigidizable guide tube from the borescope port.

The method of any preceding clause, further including performing a foam wash while the rigidizable guide tube is inserted into the borescope port.

The method of any preceding clause, wherein the steam is a dry steam.

The method of any preceding clause, further including injecting steam into an inlet of the turbine engine.

The method of any preceding clause, wherein the fluid includes at least one of compressed air or liquid.

A tool for cleaning a portion of a turbine engine including a tool body including a proximal end and a distal end and configured to be inserted into a portion of the turbine engine; a wand coupled to the distal end of the tool body, the wand including a plurality of orifices disposed along a length of the wand and a rounded tip; and a fluid delivery supply coupled to the proximal end of the tool body for delivering fluid into the tool body and the wand, wherein the plurality of orifices are configured to spray the fluid onto a surface of an airfoil in a pre-defined spray pattern, wherein the plurality of orifices include a hole array and the hole array is arranged such that, when a fluid is passed through the hole array, at least 50% of a span of the airfoil.

The tool of the preceding clause, wherein the hole array is configured to create the spray pattern and cover at least 90% of the span of the airfoil.

The tool of any preceding clause, wherein the tool body is configured to be inserted into a borescope of the gas turbine engine.

The tool of any preceding clause, wherein the spray pattern includes a spacing between 0.02 to 0.1 inches between each orifice in the hole array.

The tool of any preceding clause, wherein the wand includes a thickness that is approximately 1.5 times a diameter of each of the plurality of orifices.

The tool of any preceding clause, wherein the fluid delivery supply is configured to deliver compressed air, liquid, and/or steam.

The tool of any preceding clause, wherein the hole array includes a total orifice area, and wherein the wand includes a diameter between 100% to 150% the total orifice area.

The tool of any preceding clause, wherein the spray pattern includes a spacing of approximately 0.04inches between the fluid when contacting the surface of airfoil.

The tool of any preceding clause, wherein the spray pattern includes a spray expansion of between 4 to 20 degrees when the fluid is contacting the surface of airfoil.

The tool of any preceding clause, wherein the fluid is injected at approximately 1,000 - 5,000 psi.

The tool of any preceding clause, wherein the plurality of orifices include a diameter of approximately 0.015 and 0.035 inches.

The tool of any preceding clause, wherein the plurality of orifices are generally circular.

The tool of any preceding clause, wherein the plurality of orifices are generally ovular.

The tool of any preceding clause, wherein the plurality of orifices include a non-uniform shape.

The tool of any preceding clause, wherein the fluid delivery supply supplies the fluid mixed with pH neutral water-soluble dry blasting media forming a slurry.

The tool of any preceding clause, wherein at least some of the plurality of orifices are disposed on the rounded tip of the wand.

The tool of any preceding clause, wherein a majority of the plurality of orifices are disposed perpendicular to a longitudinal centerline of the wand.

The tool of any preceding clause, wherein the at least some of the plurality of orifices are disposed at a second angle relative to the longitudinal centerline.

It will be understood that various changes in the details, materials, and arrangements of parts and components which have been herein described and illustrated to explain the nature of the disclosure may be made by those skilled in the art within the principle and scope of the appended claims. Furthermore, while various features have been described with regard to particular embodiments, it will be appreciated that features described for one embodiment also may be incorporated with the other described embodiments.

## Claims

1. A tool (100) for cleaning a portion of a turbine engine (10) comprising:
a rigidizable guide tube (106) including a proximal end (120) and a distal end (122) and configured to be inserted into a portion of the turbine engine (10);
a flexible inner tube (104) disposed within a portion of the rigidizable guide tube (106), the flexible inner tube (104) including a proximal end (130) and a distal end (132);
a fluid delivery supply (310) coupled to the flexible inner tube (104) for delivering fluid to spray on a surface of an airfoil; and
filaments (108) coupled to the distal end (132) (122) of at least one of the flexible inner tube (104) or the rigidizable guide tube (106), wherein when fluid is injected into the flexible inner tube (104), the filaments (108) are configured to agitate the surface of the airfoil.

2. The tool (100) of claim 1, wherein the filaments (108) are retractable and are configured to be deployed at least partially out of the distal end (204) of both the flexible inner tube (104) and the rigidizable guide tube (106).

3. The tool (100) of any preceding claim, wherein the filaments (108) are coupled to a collar (118) coupled to or disposed at least partially within the flexible inner tube (104).

4. The tool (100) of any preceding claim, further comprising a second flexible inner tube (114) disposed within the rigidizable guide tube (106) and substantially adjacent to the flexible inner tube (104).

5. The tool (100) of claim 4, wherein the second flexible inner tube (114) is configured to be connected to a vacuum to remove fallen debris from the airfoil.

6. The tool (100) of any preceding claim, wherein the filaments (108) are corrugated, include a textured surface, include a dimpled surface, or a combination thereof

7. The tool (100) of any preceding claim, wherein the filaments (108) include a length of approximately 1 to 1.5 inches.

8. A method (400) for cleaning a portion of a turbine engine (10) comprising:
inserting a rigidizable guide tube (106) into a borescope port (302) of the turbine engine (10), wherein the rigidizable guide tube (106) includes a proximal end (120) and a distal end (122);
rigidizing the rigidizable guide tube (106);
injecting steam into the rigidizable guide tube (106) and into a portion of the turbine engine (10);
delivering a fluid through a flexible inner tube (104) disposed within a portion of the rigidizable guide tube (106) to spray a surface of an airfoil, the flexible inner tube (104) including a proximal end (130) and a distal end (132); and
deploying filaments (108) disposed within the distal end (132) (122) of at least one of the flexible inner tube (104) or the rigidizable guide tube (106), wherein the filaments (108) are configured to be deployed at least partially out of the distal end (132) (122) of both the flexible inner tube (104) and the rigidizable guide tube (106) towards the surface of the airfoil.

9. The method (400) of claim 8, further comprising performing a foam wash of the turbine engine (10) before inserting the rigidizable guide tube (106) into the borescope port (302).

10. The method (400) of claim 8 or 9, further comprising removing the rigidizable guide tube (106) from the borescope port (302) after the airfoil is at least partially cleaned.

11. The method (400) of claim 10, further comprising performing a foam wash subsequent to removing the rigidizable guide tube (106) from the borescope port (302).

12. The method (400) of any of claims 8 to 11, further comprising performing a foam wash while the rigidizable guide tube (106) is inserted into the borescope port (302).

13. A tool (200) for cleaning a portion of a turbine engine (10) comprising:
a tool body (210) including a proximal end (202) and a distal end (204) and configured to be inserted into a portion of the turbine engine (10);
a wand (220) coupled to the distal end (204) of the tool body (210), the wand (220) including a plurality of orifices (214) disposed along a length (244) of the wand (220) and a rounded tip (222); and
a fluid delivery supply (310) coupled to the proximal end (202) of the tool body (210) for delivering fluid into the tool body (210) and the wand (220), wherein the plurality of orifices (214) are configured to spray the fluid onto a surface of an airfoil (250 in a pre-defined spray pattern (224),
wherein the plurality of orifices (214) include a hole array (226) and the hole array is arranged such that, when a fluid is passed through the hole array, at least 50% of a span (252) of the airfoil (250).

14. The tool (200) of claim 13, wherein a majority of the plurality of orifices (214) are disposed perpendicular to a longitudinal centerline (250) of the wand (22).

15. The tool (200) of claim 13 or 14, wherein the hole array (226) includes a total orifice area, and wherein the wand (220) includes an opening having a diameter (232) between 100% to 150% the total orifice area.
